# EUROPÄISCHE PATENTANMELDUNG

(11) **EP 1 058 407 A1**
(43) Veröffentlichungstag der Anmeldung: **06.12.2000**
(21) Anmeldenummer: 99440067.9
(22) Anmeldetag: 01.04.1999
(51) Int. Cl.: H04B 7/005

(54) **Sendeleistungskorrektur in einem Mobilkommunikationssystem**

(71) Anmelder: ALCATEL, 75008 Paris (FR)
(72) Erfinder: Jeschke, Michael, 70197 Stuttgart (DE); Mortensen Dr. Ivar, 70825 Komtal (DE)
(74) Vertreter: Kugler, Hermann, Dipl.-Phys.

(57) **Zusammenfassung**

Im zukünftigen UMTS (universal mobile telecommunications system) sollen im sogenannten Macrodiversity-Modus mindestens zwei Funkfeststationen gleichzeitig mit derselben Mobilstation kommunizieren können. Es soll eine eine Sendeleistungssregelung für die Abwärtsrichtung erfolgen, bei der die Mobilstation den sogenannten TPC-Befehl (TPC: transmit power control) an alle sie versorgenden Funkfeststationen (NB1, NB2) sendet, die wiederum in Reaktion darauf ihre Sendeleistung ändern.

Die Erfindung geht von der Erkenntnis aus, daß die Sendeleistungspegel nach der Art eines "random walks" voneinander abtriften, wenn eine oder mehrere der Funkfeststationen den TPC-Befehl falsch empfangen und ihre Sendeleistung entsprechend falsch ändern. Es wird vorgeschlagen, daß in vorgebbaren Zeitabständen von den Funkfeststationen (NB1, NB2) Informationen (PL1, PL2) über die momentane Sendeleistungen an eine Funkfeststationssteuerung (SRNC) übermittelt werden, die diese Informationen ausgewertet, um zumindest für eine (NB1) der Funkfeststationen einen Korrekturwert (CV1) der Sendeleistung zu berechnen, damit diese Funkfeststation (NB1) dann dann ihre Sendeleistung zusätzlich um diesen Korrekturwert (CV1) verändert. Diese neue Methode wird "rückgekoppelte Sendeleistungskorrektur" genannt.

## Beschreibung

Es sind Mobilkommunikationssysteme, insbesondere zellulare Mobilkommunikationssysteme, bekannt, die mehrere Funkfeststationen enthalten, die mit Mobilstationen kommunizieren. Falls mindestens zwei Funkfeststationen gleichzeitig mit derselben Mobilstation kommunizieren, findet eine sogenannte Macrodiversity-Funkübertragung statt. Diese Art der Funkübertragung wird etwa bei CDMA-Mobilkommunikationssystemen (CDMA: code division multiple access) angewendet. Auch in dem geplanten Mobilkommunikationssystem UMTS (universal mobile telecommunications system) soll eine Macrodiversity-Funkübertragung zumindest während des Weiterleitens der Mobilstation von einer Funkfeststation zur nächsten stattfinden. Im UMTS muß die Sendeleistung der Funkfeststationen möglichst schnell an die variierenden Funkkanaleigenschaften, die etwa durch Funkschwund (fading) verursacht werden, angepaßt werden. Hierzu sendet die Mobilstation einen Befehl, den sogenannten TPC-Befehl (TPC: transmit power control), an alle sie versorgenden Funkfeststationen, die wiederum in Reaktion darauf ihre Sendeleistung ändern. Die Änderung erfolgt durch Erhöhung oder durch Senkung des Sendeleistungspegels um einen vorgegebenen Betrag von z.B. 1 dB. Dieser Vorgang stellt somit eine geschlossene Regelschleife zur Sendeleistungsanpassung dar.

Die Erfindung geht von der Erkenntnis aus, daß folgendes Problem im Falle von falsch detektierten TPC-Befehlen auftritt: Empfängt eine der Funkfeststationen den TPC-Befehl falsch, so ändert diese ihre Sendeleistung entsprechend falsch, im Vergleich zu denjenigen Funkfeststationen, die den TPC-Befehl richtig empfangen. Das bedeutet, daß diese einzelne Funkfeststation ihre Sendeleistung gegensinnig zu den anderen Funkfeststationen ändert. Demnach laufen die Sendeleistungspegel mit der Zeit nach der Art eines sogenannten "random walks" auseinander. Diese Drift verringert den gewünschten Macrodiversity-Gewinn. Um nun diese Drift zu verhindern, wird erfindungsgemäß vorgeschlagen, daß in vorgebbaren Zeitabständen von den Funkfeststationen Informationen über die momentane Sendeleistungen an eine Funkfeststationssteuerung übermittelt werden, die diese Informationen ausgewertet werden, um zumindest für eine der Funkfeststationen einen Korrekturwert der Sendeleistung zu berechnen, und daß die Funkfeststationssteuerung den Korrekturwert an die Funkfeststation übermittelt, die dann ihre Sendeleistung zusätzlich um diesen Korrekturwert verändert. Demnach werden die Sendeleistungspegel von der Funkfeststationssteuerung in regelmäßigen Zeitabständen überwacht, um festzustellen, ob die zeitlichen Verläufe der Sendeleistungspegel auseinander driften und um gegebenenfalls eine Sendeleistungskorrektur in zumindest einer der Funkfeststationen durchzuführen. Die Funkfeststation, der ein Korrekturwert mitgeteilt wird, führt also zusätzlich zu der bekannten Sendeleistungsänderung aufgrund des TPC-Befehls eine Korrektur dieser Änderung durch, sofern eine Drift der Sendeleistungspegel festgestellt wird.

Diese Methode, bei der die Entscheidung der Funkfeststationssteuerung, einer Funkfeststation eine Sendeleistungskorrektur anzuweisen, in Abhängigkeit von zurückgemeldeten Informationen (Sendepegeldaten) über die tatsächliche Sendeleistungen der Funkfeststationen erfolgt, wird hier auch als "rückgekoppelte Sendeleistungskorrektur" bezeichnet. Ein Vorteil der vorgeschlagenen Methode ist es, daß die Sendeleistungspegel nicht sehr weit voneinander abweichen können, weil gleich zu Beginn einer auftretenden Drift die Sendeleistung korrigiert wird.

Besonders vorteilhafte Ausgestaltungen der Erfindung ergeben sich aus den Unteransprüchen.

Im folgenden wird die Erfindung und die sich daraus ergebenden Vorteile anhand eines Ausführungsbeispiels näher beschrieben. Dazu wird auf die folgenden schematischen Darstellungen Bezug genommen:
- Fig.1a,: die den Aufbau eines herkömmlichen Mobilkommunikationssystems zeigt;
- Fig. 1b,: die den zeitlichen Verlauf der Sendeleistungspegel zeigt mit der herkömmlicherweise auftretenden Drift;
- Fig.2a,: die den Aufbau eines erfindungsgemäßen Mobilkommunikationssystems zeigt;
- Fig.2b,: die den verbesserten zeitlichen Verlauf der Sendeleistungspegel zeigt, den ein erfindungsgemäßes Verfahren bewirkt;
- Fig.3,: die ein Ablaufdiagramm für das erfindungsgemäße Verfahren zeigt.

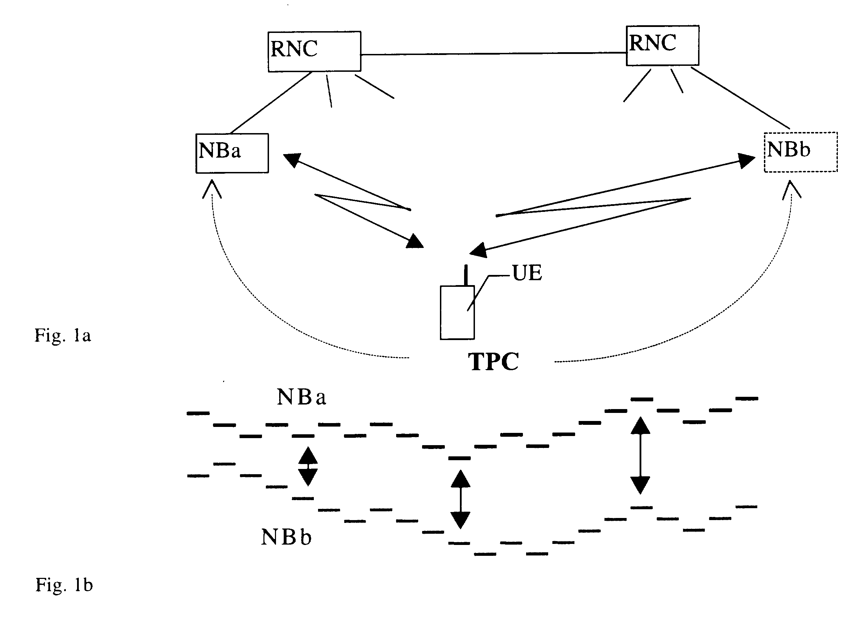

Die Fig.1a zeigt ein herkömmliches Mobilkommunikationssystem mit mindestens zwei Funkfeststationen NBa und NBb, die über ein Steuerungsnetzwerk miteinander verbunden sind und die mit einer Mobilstation UE kommunizieren. Das Steuerungsnetzwerk enthält sogenannte radio network controller RNC, über die die Funkfeststationen miteinander und mit Telekommunikationsnetzen, wie etwa mit dem PSTN (public switched telephone network), verbunden werden. In der Fig.1a ist der Fall dargstellt, daß die beiden Funkfeststationen NBa und NBb zumindest zeitweise gleichzeitig mit der einen Mobilstation UE kommunizieren. Es ist also eine Macrodiversity-Situation dargestellt, bei der die Funkfeststationen NBa und NBb gleichzeitig Funksignale mit der Mobilstation UE austauschen. Zur Regelung der Sendeleistung in den einzelnen Funkfeststationen sendet die Mobilstation UE in regelmäßigen Zeitabständen einen einheitlichen Befehl, nämlich den sogenannten TPC-Befehl, an die beiden Funkfeststationen NBa und NBb. Diese werten den empfangenen TPC-Befehl aus und ändern ihre Sendeleistung. Der TPC-Befehl zeigt an, ob die Sendeleistung erhöht oder verringert werden soll. Nur wenn beide Funkfeststationen den TPC-Befehl korrekt empfangen, ändern sie ihre Sendeleistung gleichsinnig.

In Fig.1b ist der zeitliche Verlauf der Sendeleistungspegel für die beiden Funkfeststationen NBa und NBb dargestellt, der sich ergibt, wenn von Zeit zu Zeit ein fehlerhafter Empfang des TPC-Befehls auftritt. Aufgrund der nicht gleichsinnigen Änderungen der Sendeleistungen rücken die beiden Sendeleistungspegel allmählich voneinander ab. Es tritt also die eingangs genannte unerwünschte Drift auf.

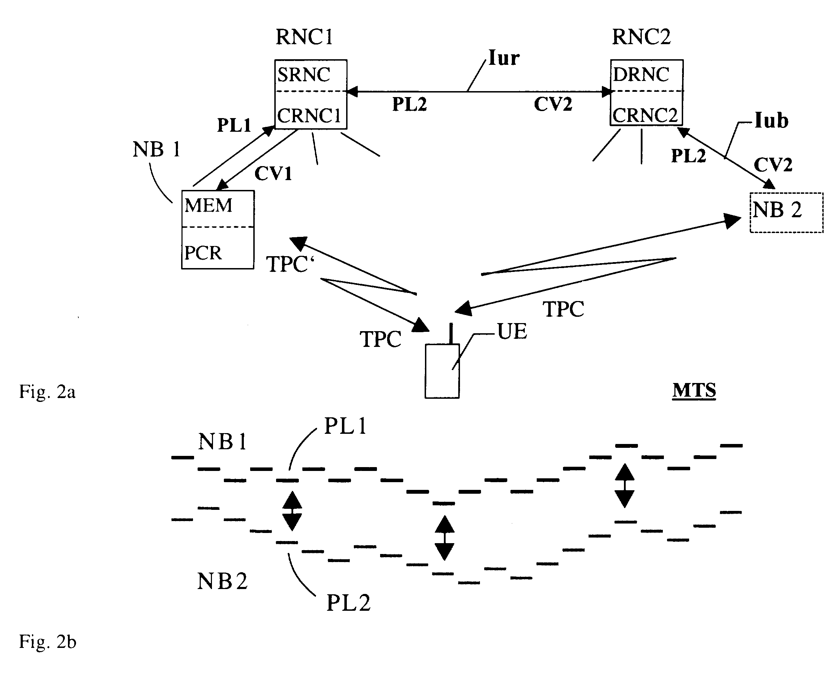

Die Fig.2a zeigt den Aufbau eines erfindungsgemäßen Mobilkommunikationssystems MTS, bei dem dieses Problem nicht auftritt. Das Mobilkommunikationssystem enthält mehrere Funkfeststationen, von denen hier lediglich zwei NB1 und NB2 dargestellt sind. Diese beiden Funkfeststationen NB1 und NB2 sind über ein Steuerungsnetzwerk miteinander verbunden und kommunizieren zumindest zeitweise gleichzeitig mit einer Mobilstation UE. Das bedeutet, daß zumindest zeitweise eine Macrodiversity-Funkübertragung stattfindet. Das Steuerungsnetzwerk enthält zwei radio network controller RNC1 und RNC2, die die Funkfeststationen NB1 und NB2 miteinander verbinden und von denen der eine RNC1 eine Verbindung zu einem nicht dargestellten Telekommunikationsnetz herstellt. Diese radio network controller RNC1 und RNC2 lassen sich jeweils in zwei Funktionseinheiten SRNC und CRNC1 bzw. DRNC und CRNC2 unterteilen:

Der erste radio network controller RNC1 hat eine erste Funkfeststationssteuerung SRNC, die die oben genannte Macrodiversity-Funkübertragung leitend überwacht. Der zweite radio network controller RNC2 hat eine zweite Funkfeststationssteuerung DRNC, die die erste Funkfeststationssteuerung SRNC dabei unterstützt. Diese Funkfeststationssteuerung SRNC und DRNC steuern demnach Funktionen, die das Macrodiversity für die Mobilstation UE betreffen.

Außerdem enthalten die beiden radio network controller RNC1 und RNC2 jeweils eine weitere Funkfeststationssteuerung CRNC1 bzw. CRNC2, deren Funktionen im wesentlichen auf die Überwachung der Funkübertragungen von den damit verbundenen Funkfeststationen gerichtet sind, wie etwa auf das radio resource management, und nicht auf die Steuerung der Macrodiversity-Funktionen.

Die Signalisierung zwischen den beiden radio network controllern RNC1 und RNC2 erfolgt über eine erste Schnittstelle lur. Die Signalisierung zwischen einem der radio network controllern RNC1 oder RNC2 und einer der Funkfeststationen NB1 bzw. NB2 erfolgt jeweils über eine zweite Schnittstelle lub. Die Schnittstellen lur und lub werden später noch näher beschrieben.

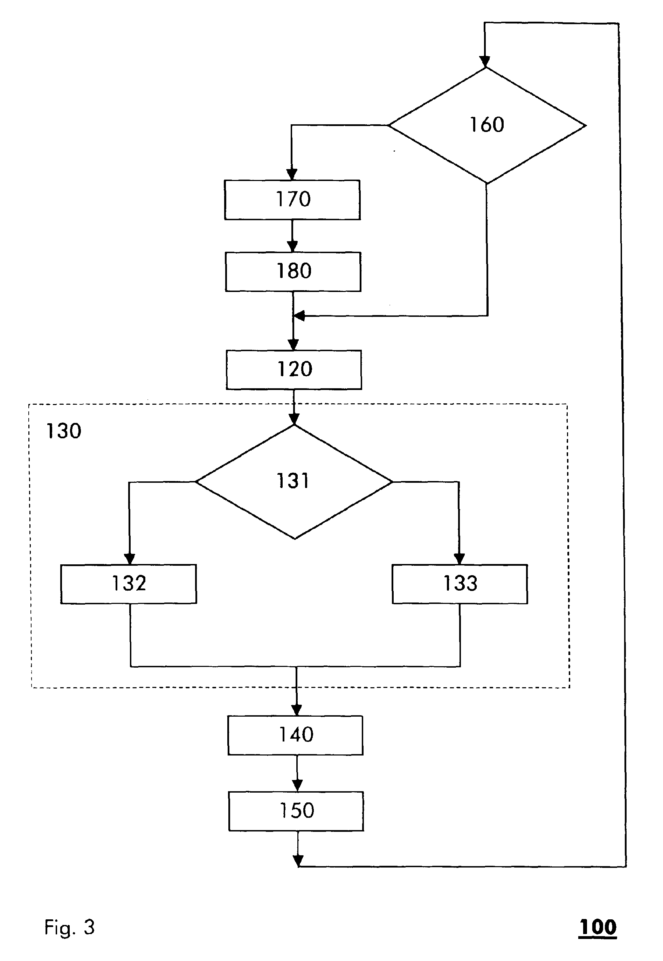

Eine jede der beiden Funkfeststationen NB1 und NB2 ändert ihre Sendeleistung nach einem erfindungsgemäßen Verfahren, bei dem Korrekturwerte CV1 und CV2 für zusätzliche Sendeleistungskorrekturen von der ersten Funkfeststationssteuerung SRNC berechnet und jeweils an eine der Funkfeststationen NB1 bzw. NB2 übermittelt werden, um dort die momentane Sendeleistung zu korrigieren, falls von der leitenden Funkfeststationssteuerung SRNC eine Drift der Sendeleistungspegel beobachtet wird. Das Verfahren wird nun anhand der Fig.3 noch näher beschrieben, wobei auch auf Fig. 2b Bezug genommen wird, die den Effekt dieses Verfahrens veranschaulicht.

Die Fig.2b zeigt den zeitlichen Verlauf der Sendeleistungspegel, die aufgrund der erfindungsgemäßen Maßnahmen langfristig ein bestimmtes Verhältnis zueinander wahren und nicht auseinander laufen. Die Darstellung in Fig.2b geht von demselben Fehlermuster beim Empfang der TPC-Befehle aus, wie die Darstellung in Fig. 1b. Im Vergleich der beiden Figuren sieht man deutlich die Verbesserung, die durch das neue Verfahren, das hier auch mit "rückgekoppelte Sendeleistungskorrektur" bezeichnet werden soll, erreicht wird.

Die Fig.3 zeigt das Ablaufdiagramm für ein solches Verfahren 100 zum Ändern der Sendeleistung in einer Funkfeststation. Unter dem Begriff "Sendeleistung" wird hier die Sendeleistung verstanden, die in Abwärtsrichtung für die Bereitstellung derjenigen Funkdienste benötigt wird, welche über Macrodiversity-Funkkanäle abgewickelt werden. Hierbei werden die von einer einzelnen Mobilstation genutzten Funkdienste betrachtet, wobei sich die Sendeleistung auf eine der Funkzellen bezieht, die von einer der Funkfeststationen versorgt wird.

Das Verfahren 100 bezieht sich auf die Änderung der Sendeleistung in der Funkfeststation NB1 nach Fig.2a, auf die hier auch Bezug genommen wird, und enthält die Schritte 120 bis 180. Es wird nicht näher darauf eingegangen, daß in dem Mobilkommunikationssystem auch auf die andere Funkfeststation NB2 das in der nachfolgend beschrieben Verfahren angewendet wird. Die Funkübertragung erfolgt im Zeitmultiplex, d.h. die Funksignale werden innerhalb von Zeitschlitzen übertragen, wobei mehrere Zeitschlitze einen Zeitrahmen bilden. In diesem Beispiel enthält ein Zeitrahmen 16 Zeitschlitze. Die Durchführung des Verfahrens 100 wird hier für die Zeitdauer von 17 Zeitschlitzen mit den nicht dargestellten Nummerierungen k-1 bis k+15 betrachtet (k ist ein Zähler mit Startwert k=0). Das bedeutet, daß die Zeitdauer vom Ende eines Zeitrahmens (Zeitschlitz k-1) bis zum Ende des nachfolgenden Zeitrahmens (Zeitschlitz k+15) betrachtet wird.

Zum Ende des ersten Zeitrahmens (Zeitschlitz k-1) sind bereits die später noch beschriebenen Schritte 170 und 180 durchlaufen worden. Dabei wurde eine Drift erkannt und ein Korrekturwert CV1 für die im nächsten Zeitrahmen (mit den Zeitschlitz k bis k+15) berechnet. Von der Funkfeststationssteuerung SRNC wird dieser Korrekturwert CV1 über die Schnittstelle lub an die Funkfeststation gesendet. Es kann auch sein, daß keine Korrektur der Sendeleistung erforderlich ist. In diesem Fall hat der Korrekturwert den Betrag Null oder es wird kein Korrekturwert gesendet. In diesem Beipiel ist jedoch eine Drift der Sendepegel beobachet worden und der von der Funkfeststationssteuerung SRNC berechnete Korrekturwert ist CV1 = -2dB.

In einem Schritt 120 wird dieser Korrekturwert CV1 nun von der Funkfeststation NB1 empfangen und in einem Speicher MEM abgelegt, auf den eine Sendeleistungssteuerung PCR zugreift (siehe auch Fig. 2a).

In diesem Beispiel wird im Zeitschlitz k-1 in Abwärtsrichtung ein Nutzdaten-Funksignal von beiden Funkfeststationen NB1 und NB2 gleichzeitig an die Mobilstation UE gesendet, wobei die Funkfeststation NB1 mit einer momentanen Sendeleistung von 20dBm und die Funkfeststation NB2 mit einer momentanen Sendeleistung von 18dBm senden.

In Reaktion darauf sendet die Mobilstation UE in Aufwärtsrichtung einen Befehl TPC, um den beiden Funkfeststationen NB1 und NB2 anzuzeigen, daß die Sendeleistung geändert werden muß. In diesem Beispiel wünscht die Mobilstation eine Erhöhung der Sendeleistung um +1dB für den nächsten Zeitschlitz k. Auch dieser Befehl TPC wird im Schritt 120 von der Funkfeststation NB1 empfangen.

In einem Schritt 130 wird zunächst die Änderung der Sendeleistung in herkömmlicher Weise durchgeführt, die hier am Beispiel der Funkfeststation NB1 näher beschrieben wird: Die Funkfeststation NB1 wertet in einem Teilschritt 131 den von ihr empfangenen Befehl TPC' aus. Falls sie den Befehl richtig empfangen hat, d.h. falls der empfangene Befehl TPC' gleich dem gesendeten Befehl TPC ist, stellt sie fest, daß die Sendeleistung erhöht werden muß und geht zu einem Teilschritt 132, wo sie die Sendeleistung um einen fest vorgegebenen Betrag von 1 dB erhöht. Falls der Befehl jedoch nicht richtig empfangen wird (TPC' nicht gleich TPC), wird in einem Teilschritt 133 die Sendeleistung - entgegen dem Wunsch der Mobilstation - verringert. Diese Absenkung des Sendeleistungpegels beträgt dann -1 dB. In dem Schritt 130 wird also die Sendeleistung lediglich durch Berücksichtigung des empfangenen Befehls TPC' geändert.

Es folgt nun ein weiterer Schritt 140, bei dem von der Sendeleistungssteuerung PCR der Funkfeststation NB1 die Sendeleistung zusätzlich anhand des ihr vorgegebenen Korrekturwertes CV1 geändert wird, weil im Schritt 170 eine Drift der Sendepegel beobachtet wurde, sodaß die Sendeleistung der Funkfeststation NB1 etwas verringert werden muß. Der Korrekturwert CV1 wird in dem Speicher MEM abgelegt. Der von der Sendeleistungssteuerung PCR der Funkfeststation NB1 zuletzt in Schritt 130 aufgrund des Befehls um +1dB erhöhte Sendeleistungspegel wird nun zusätzlich um einen Teilbetrag des Korrekturwertes CV1 verringert, nämlich um CV1/16= -2dB/16= -0,125 dB. Im Vergleich zu der herkömmlichen Veränderung der Sendeleistung um 1 dB gemäß Schritt 130 ist diese zusätzliche Veränderung gemäß Schritt 140 in ihrem Betrag geringer und führt dadurch zu einer sanften Korrektur der Sendeleistung.

In Schritt 150 sendet dann die Funkfeststation NB1 in dem aktuellen Zeitschlitz mit der korrigierten Sendeleistung.

In Schritt 160 wird geprüft, ob das Ende des Zeitrahmens erreicht ist. Ist dies nicht der Fall (Zeitschlitz k, k+1, k+2 ..., k+14), wiederholen sich die Schritte 120 bis 150. Bei jeder Wiederholung wird die Sendeleistung um den Teilbetrag CV1/16 = -0,125 dB korrigiert, sodaß nach 16 Durchläufen der Schritte 120 bis 150, d.h. am Ende des Zeitrahmens, die Korrektur um den Wert CV1 = -2dB vollständig durchgeführt ist. Ist dann das Ende des Zeitrahmens erreicht (k+15), wird zu einem Schritt 170 übergegangen.

Im Schritt 170 meldet die Funkfeststation NB1 der Funkfeststationssteuerung SRNC über die Schnittstelle lub ihre aktuelle Sendeleistung PL1, die jetzt der vollständig korrigierten Sendeleistung entspricht. Auch die andere Funkfeststation NB2 meldet ihre momentane Sendeleistung. Dann wird zum Schritt 180 übergegangen, um durch Auswertung der jetzt gemeldeten und der zuvor in früheren Zeitrahmen gemeldeten Informationen festzustellen, ob die Sendeleistungspegel noch auseinander driften und um gegebenenfalls einen neuen Korrekturwert zu berechnen.

Die Rückmeldung der momentanen Sendeleistungspegel erfolgt zeitrahmenweise. Nach Beobachtung der Pegel über mehrere Zeitrahmen hin, kann eine Drift festgestellt werden. Es muß zumindest für eine der beiden Funkfeststationen ein Korrekturwert berechnet werden, um die unerwünschte Abweichung der Sendeleistungspegel zu kompensieren. Es kann auch, wie in diesem Beispiel, für beide Funkfeststationen NB1 und NB2 jeweils ein Korrekturwert berechnet werden, um die beiden driftenden Sendeleistungspegel wieder zueinander zu führen. Von der in Fig. 2a dargestellten Funkfeststationssteuerung SRNC werden beispielsweise der Korrekturwert CV1 =-2dB für die Funkfeststation NB1 und der Korrekturwert CV2=+1dB für die Funkfeststation NB2 berechnet.

Zur Berechnung der Korrekturwerte können neben den von den Funkfeststationen rückgemeldeten tatsächlichen Sendeleistungen PL1 und PL2 verschiedene weitere Kriterien herangezogen werden:
- Die Funkfelddämpfungen in Abwärtsrichtung.
- Die in Abwärtsrichtung innerhalb der Funkzelle von NB1 und NB2 jeweils vorhandene Verkehrslast. Diese werden von den Funkfeststationen NB1 und NB2 oder von der damit verbundenen Funkfeststationssteuerung CRNC1 und CRNC2 ermittelt und der leitenden Funkfeststationssteuerung SRNC mitgeteilt.

Alternativ zu einer Übermittlung von absoluten Sendeleistungen (dBm- oder Watt-Werte) können auch relative Leistungswerte (dB-Werte) übermittelt werden, die sich aus der Kumulation der Veränderungen der Sendeleistung ergeben, welche seit der vorangegangenen Übermittlung der Sendeleistung stattgefunden haben. Diese Vorgehensweise entspricht einer kurzzeitigen Integration, die auch auf eine Drift der Sendeleistungspegel anzeigen kann.

Es ist auch folgende besonders einfache die Korrektur der Sendeleistung denkbar: Die zusätzliche Änderung der Sendeleistung mittels Korrekturwert wirkt auf die aufgrund des Empfangs des TPC-Befehls durchgeführte herkömmliche Änderung ein, indem geprüft wird, ob diese Änderung in eine Richtung zielt, die mit einer durch den Korrekturwert angezeigten Richtung übereinstimmt, und indem der Empfang des Befehl ignoriert und diese Änderung nicht durchgeführt werden, falls die beiden Richtungen nicht übereinstimmen. Soll beispielsweise aufgrund des TPC-Befehls die Sendeleistung um +1dB erhöht werden und ist eine Korrektur um -1 dB angezeigt, dann wird der TPC-Befehl ignoriert und nicht ausgeführt. Demnach bleibt der Sendeleistungspegel unverändert.

Das beschriebene Verfahren kann besonders vorteilhaft eingesetzt werden bei der Funkübertragung nach dem sogannnten SSDT-Modus (site selection diversity transmit power control), der an sich aus der Standardisierung vom UMTS bekannt ist:

Beim SSDT-Modus sendet eine Funkfeststation, die an einer Macrodiversity-Funkübertragung beteiligt ist, den Steuerungsteil (control part) der Signale mit einem ersten Sendeleistungspegel (power p1). Im SSDT-Modus wird nun der Datenteil (data part) mit diesem Sendeleistungspegel (p1) nur dann gesendet, wenn die Funkfeststation eine sogenannte primary cell versorgt. Wird der Status gewechselt und eine sogenannte non-primary cell versorgt, dann wird der Datenteil mit einem zweiten geringeren Sendeleistungspegel (p2<p1) gesendet, der sogar Null sein kann (p2=0). Für den SSDT-Modus, läßt sich die geschilderte Erfindung auf jede Funkfeststation dadurch anwenden, daß sich die Sendeleistung (PL1 in Fig. 2a), die von der Funkfeststation an die Funkfeststationssteuerung SRNC übermittelt wird, auf den ersten Sendeleistungspegel (p1) bezieht, und die Sendeleistungssteuerung PCR innerhalb der Funkfeststation auf diesen Sendeleistungspegel (p1) einwirkt.

## Patentansprüche

1. Verfahren (100) zum Ändern der Sendeleistung in mindestens zwei Funkfeststationen (NB1, NB2), die innerhalb eines Mobilkommunikationssystems (MTS) zumindest zeitweise gleichzeitig mit einer Mobilstation (UE) kommunizieren, bei dem von der Mobilstation (UE) an die Funkfeststationen (NB1, NB2) ein Befehl (TPC) gesendet wird (120), der die Funkfeststationen (NB1, NB2) anweist ihre Sendeleistungen zu verändern, bei dem in jeder (NB1) der Funkfeststationen aufgrund eines Empfangs des Befehls (TPC) die Sendeleistung verändert wird (130), bei dem in vorgebbaren Zeitabständen von den Funkfeststationen (NB1, NB2) Informationen (PL1, PL2) über ihre momentane Sendeleistungen an eine Funkfeststationssteuerung (SRNC) übermittelt werden, bei dem von der Funkfeststationssteuerung (SRNC) diese Informationen (PL1, PL2) ausgewertet werden, um zumindest für eine (NB1) der Funkfeststationen einen Korrekturwert (CV1) für ihre Sendeleistung zu berechnen und an diese Funkfeststation (NB1) zu übermitteln, und bei dem in dieser Funkfeststation (NB1) die Sendeleistung zusätzlich um diesen Korrekturwert (CV1) verändert wird (140).

2. Verfahren (100) nach Anspruch 1,
bei dem die zusätzliche Änderung der Sendeleistung sukzessive durchgeführt wird, indem die Sendeleistung zeitabschnittsweise jeweils nur um Teilbeträge des Korrekturwertes (CV1) verändert wird (140).

3. Verfahren nach Anspruch 1,
bei dem die zusätzliche Änderung der Sendeleistung auf die aufgrund des Empfangs des Befehls (TPC) durchgeführten Änderung einwirkt, indem geprüft wird, ob diese Änderung in eine Richtung zielt, die mit einer durch den Korrekturwert (CV1) angezeigten Richtung übereinstimmt, und indem der Empfang des Befehls (TPC) ignoriert und diese Änderung nicht durchgeführt werden, falls die beiden Richtungen nicht übereinstimmen.

4. Verfahren nach Anspruch 1,
bei dem die von der Funkfeststation an die Funkfeststationssteuerung übermittelte Information einen Wert enthält, der die über einen vorgegebenen Zeitraum kumulierte Änderung der Sendeleistung angibt.

5. Verfahren nach (100) Anspruch 1,
bei dem von jeder der Funkfeststation (NB1; NB2) ihre Verkehrslast in Abwärtsrichtung ermittelt und an die Funkfeststationssteuerung (SRNC) übermittelt wird und bei dem von der Funkfeststationssteuerung (SRNC) der Korrekturwert (CV1) in Abhängigkeit von den Verkehrslasten berechnet wird (140).

6. Verfahren nach Anspruch 1,
bei dem von denjenigen Funkfeststationssteuerungen (CRNC1, CRNC2), die unmittelbar mit den Funkfeststationen (NB1, NB2) verbunden sind, die Verkehrslasten in Abwärtsrichtung ermittelt und an diejenige Funkfeststationssteuerung (SRNC) übermittelt werden, von der der Korrekturwert (CV1) in Abhängigkeit von den Verkehrslasten berechnet wird.

7. Verfahren (100) nach Anspruch 1,
bei dem von der Funkfeststationssteuerung (SRNC) der Korrekturwert (CV1) berechnet wird in Abhängigkeit von einer Funkfelddämpfungen in Abwärtsrichtung, die durch Messungen auf einem Rundspruchsignalisierungskanal durchgeführt werden (140).

8. Funkfeststation (NB1) für ein Mobilkommunikationssystem (MTS), die mit einer Funkfeststationssteuerung (SRNC) verbunden ist, und die einen Speicher (MEM) und eine damit verbundene Sendeleistungssteuerung (PCR) enthält, und die von einer Mobilstation (UE) einen Befehl (TPC) empfängt und aufgrund eines Empfangs des Befehls (TPC) ihre Sendeleistung mittels der Sendeleistungsregelung (PCR) verändert, und die Informationen (PL1) über ihre momentane Sendeleistung an die Funkfeststationssteuerung (SRNC) übermittelt, und die von der Funkfeststationssteuerung (SRNC) einen Korrekturwert (CV1) für ihre Sendeleistung erhält, und die den Korrekturwert (CV1) in dem Speicher (MEM) ablegt und ihre Sendeleistung mittels der Sendeleistungssteuerung (PCR) zusätzlich um diesen Korrekturwert (CV1) verändert.

9. Funkfeststationssteuerung (SRNC), die in einem Mobilkommunikationssystem (MTS) mit mindestens zwei Funkfeststationen (NB1, NB2) verbunden ist und die von diesen Funkfeststationen (NB1, NB2) Informationen (PL1; PL2) über ihre momentane Sendeleistung empfängt und auswertet, und die daraus einen Korrekturwert (CV1) für zumindest eine (NB1) der Funkfeststationen berechnet, die ihre Sendeleistung um diesen Korrekturwert (CV1) verändert zusätzlich zu einer Änderung aufgrund eines Empfangs eines Befehls (TPC) von einer Mobilstation (UE).

10. Mobilkommunikationssystem (MTS) mit mindestens zwei Funkfeststationen (NB1, NB2), die zumindest zeitweise gleichzeitig mit einer Mobilstation (UE) kommunizieren, wobei die Mobilstation (UE) an die Funkfeststationen (NB1, NB2) einen Befehl (TPC) sendet, der die Funkfeststationen (NB1, NB2) anweist, ihre Sendeleistung zu verändern, bei dem jede (NB1) der Funkfeststationen einen Speicher (MEM) und eine damit verbundene Sendeleistungssteuerung (PCR) enthält und aufgrund eines Empfangs des Befehls (TPC) ihre Sendeleistung mittels der Sendeleistungsregelung (PCR) verändert, und mit mindestens einer Funkfeststationssteuerung (SRNC), an die jede der Funkfeststationen (NB1, NB2) Informationen (PL1, PL2) über ihre momentanen Sendeleistungen übermitteln und die zumindest für eine (NB1) der Funkfeststationeneinen Korrekturwert (CV1) für ihre Sendeleistung berechnet und an diese Funkfeststation (NB1) ünermittelt, die den Korrekturwert (CV1) in dem Speicher (MEM) ablegt, um mittels der Sendeleistungssteuerung (PCR) ihre Sendeleistung zusätzlich um diesen Korrekturwert (CV1) zu verändern.
